# EUROPEAN PATENT SPECIFICATION

(11) **EP 0 534 600 B1**
(45) Date of publication and mention of the grant of the patent: **15.05.1996**
(21) Application number: 92307357.1
(22) Date of filing: 12.08.1992
(51) Int. Cl.: B65D 85/67, B65D 83/08, A47K 10/38

(54) **Wet wipe dispensing nozzle**
Spender für nasse Tücher
Appareil pour la distribution de tissus mouillés

(30) Priority: 23.09.1991 US 763683
(43) Date of publication of application: 31.03.1993
(73) Proprietor: SCOTT PAPER COMPANY, Delaware County, PA 19113 (US)
(72) Inventor: Frazier, Alan D., West Chester, Pennsylvania 19382 (US)
(74) Representative: W.P. Thompson & Co.

(56) References cited:
- EP-A- 0 107 487
- DE-A- 2 542 038
- DE-A- 2 802 443
- US-A- 4 180 160
- US-A- 4 534 491

## Description

The present invention relates generally to wet wipe containers and, more particularly, to dispensing nozzles through which wet wipes are dispensed from the container.

A variety of wet wipe container/dispensers are known in the prior art. One such container/dispenser is taught in U.S. Patent No. 4,180,160 to Ogawa, et al. The Ogawa, et al. patent discloses a wet tissue drawing member affixed to the top of the container. The wet tissue drawing member may be in the form of a soft rubber disc (see figure 8 thereof) with a hole therethrough. Projecting up from the top of the container is a cylindrical neck which is engageable with a protective cap. The protective cap is restrained by a flexible strip extending therefrom attached to the top of the container.

U.S. Patent No. 4,171,047 to Doyle, et al. discloses a wet wipe container which includes an exit slit or opening at the base of what appears to be a funnelled exit nozzle. A cap for the funnelled exit nozzle appears to be integrally formed with the top of the container and an interconnecting restraining strap.

U.S. Patent No. 4,219,129 to Sedgwick teaches yet another moist tissue dispenser very similar to that which is taught by Doyle, et al. A funnelled exit port is integrally formed with the top of the container having a dispensing opening therethrough. A cap is provided to seal the funnelled exit port, the cap having a restraining strap extending therefrom attached to the top of the container.

U.S. Patent No. 4,328,907 to Beard teaches still another dispenser for moistened paper tissues. The dispenser taught by Beard includes an inverted frusto-conical dispensing nozzle with a central orifice in the base thereof. A sealing closure is provided which engages the frusto-conical dispensing nozzle. The sealing closure is connected by an integral flap to the main body of the lid of the container.

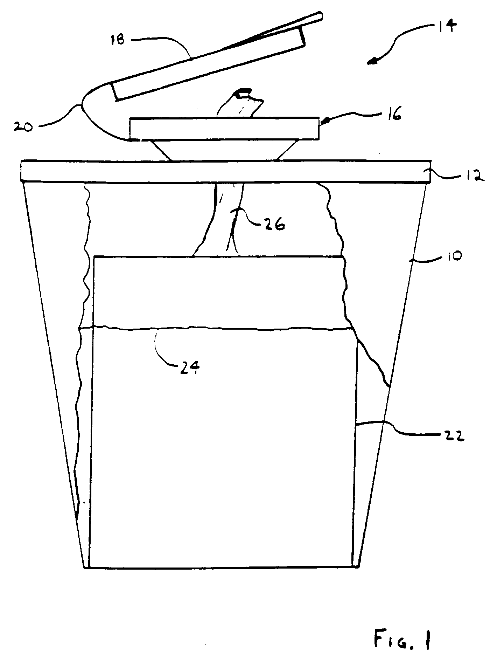

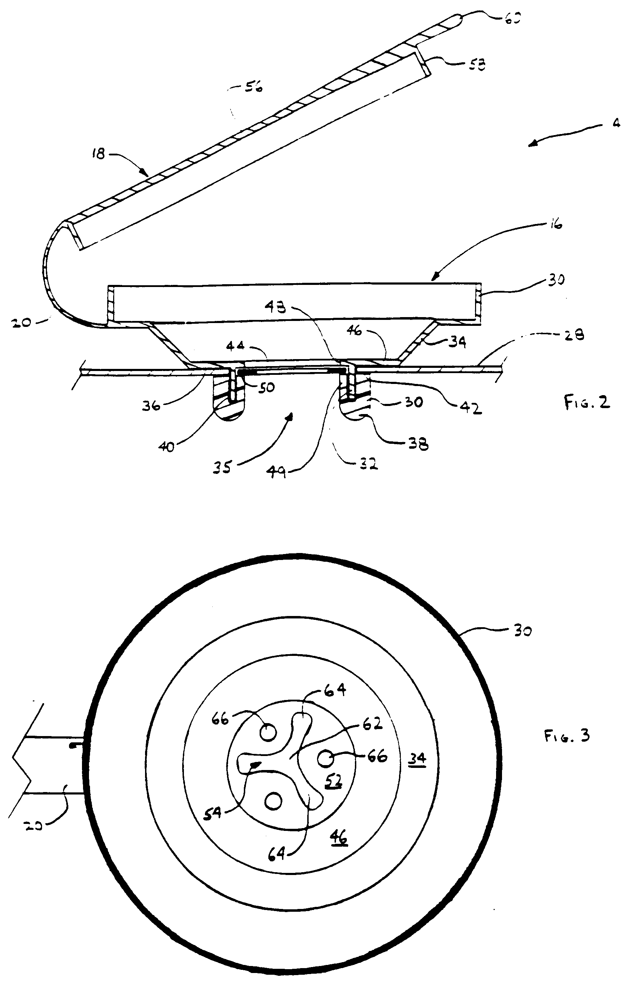

U.S. Patent No. 4,651,895 to Niske, et al. teaches a sealable dispenser for individual moistened towelettes. The dispenser includes a dispensing nozzle having an orifice therethrough. A plurality of shapes for the dispensing orifice are taught (see figures 2 to 8 of Niske, et al.).

EP-A- 0 107 487 and DE-A- 2802 442 both disclose dispensers involving a disc having a hole therein through which the wet wipe is dispensed.

Nothing in the prior art teaches a wet wipe dispensing nozzle which reacts to the direction from which the wet wipe is pulled to alleviate some of the frictional force imparted to the wet wipe as it exits the dispenser. Further, nothing in the prior art teaches a wet wipe dispensing nozzle which reacts to the twisting of the lead end of the web remaining in the dispenser after a sheet has been dispensed such that some of the twisting is alleviated.

It is therefore an object of the present invention in its various embodiments to provide one or more of the following:-
(i) a wet wipe dispensing nozzle which reacts to the direction from which the wet wiper is drawn therethrough to alleviate some of the frictional force exerted on the wet wipe as it passes through the dispensing orifice,
(ii) a wet wipe dispensing nozzle which includes a rotatable disc, preferably having a slotted dispensing opening therethrough,
(iii) a wet wipe dispensing nozzle with a rotatable dispensing disc wherein a plurality of dispensing slots intersect at a dispensing slot node,
(iv) a wet wipe dispenser wherein liquid squeezed from the wiper as it is pulled through the exit orifice is permitted to flow back into the container,
(v) a dispenser for wipers including a dispensing gateway having a rotatable dispensing disc.

According to one embodiment of the invention there is provided a dispensing gateway comprising:
(a) a nozzle;
(b) means for affixing said nozzle to the container;
(c) a bore through said nozzle;
(d) a rotatable dispensing disc residing adjacent said bore, said dispensing disc having an orifice therethrough.

According to a further embodiment of the invention there is mounted to the lid of a wet wipe container a dispensing nozzle which includes a funnelled portion having an orifice in the base thereof. A dispensing disc is rotatably supported immediately below the orifice, the dispensing disc preferably having a plurality of slots therein converging at a node to form one contiguous dispensing opening.

The rotatable dispensing disc may also be provided with one or more drain holes therethrough which are separate from the dispensing opening. A nozzle cap may be provided which sealingly engages the dispensing nozzle thereby creating a chamber in which the lead end of the web being dispensed is retained and enclosed for next dispensing. In such manner, with the lead end of the rolled web maintained in a sealed environment until it is ready to be dispensed, the amount of vapour allowed to transmit to the atmosphere is minimized. Any liquid which is squeezed off of the web as it is pulled through the dispensing opening falls to the bottom of the funnelled portion collecting on the dispensing disc where it will fall through the drain holes and back into the container. Because the disc is rotatable, it will rotate to the position of least resistance depending on the direction from which the user pulls the web.

The invention will now be further described by way of example, with reference to the accompanying drawings, in which:-
Fig. 1 is a side elevation of the improved wet wipe dispensing nozzle of the present invention mounted on a container for holding wet wipes;
Fig. 2 is a cross sectional view of the improved wet wipe dispensing nozzle of the present invention; and
Fig. 3 is a top plan view of the improved wet wipe dispensing nozzle of the present invention.

Turning first to Fig. 1, there is shown a container 10 having a lid 12 mounted thereon. Lid 12 may be affixed to container 10 by means of threads, snap fitting, inter-engaging ribs, frictional engagement or the like. Attached to lid 12 is dispensing gateway 14. Dispensing gateway 14 includes dispensing nozzle 16, cap 18 and restraining strap 20. It is preferable that dispensing nozzle 16, cap 18 and restraining strap 20 are all integrally formed as a single piece. The preferred materials of construction are high density polyethylene.

Disposed within container 10 is a coreless roll of wet wipes 22. Container 10 also holds a liquid such as a solvent up to a level 24 with which the roll 22 becomes saturated. The lead end 26 of roll 22 dispenses from the centre of roll 22 up through the dispensing nozzle 16.

Looking next at Fig. 2, there is shown a cross-sectional view of the dispensing gateway 14 of the present invention as mounted on the top planar surface 28 of lid 12. As shown therein, dispensing nozzle 16 includes an upper cylindrical wall 30, a lower cylindrical wall 32 and an intermediate funnelled or frusto-conical section 34. The lower surface 28 of the frusto-conical section 34 is supported on the top surface 28 of lid 12 and is preferably sealingly engaged therewith to prevent liquid leaking therethrough should container 10 be knocked over and minimize vapour escaping therethrough to the atmosphere. Throat 32 extends through an opening 35 in top surface 28 of lid 12.

Dispensing nozzle 16 is affixed to lid 12 by means of retaining ring 38 which includes an annular slot 40 therein. Retaining ring 38 is press fit such that lower cylindrical wall or throat 32 is inserted into annular slot 40 thereby trapping lid 12 between lower surface 36 of frusto-conical section 34 and bearing surface 42 of retaining ring 38. Glue, silicone or the like may be used to aid the affixation of retaining ring 38 to throat 32 as well as between lower surface 36 and lid 12 and bearing surface 42 and lid 12.

There is an orifice or bore 44 through the base 46 of frusto-conical section 34. The base of frusto-conical section 34 extends radially inward past lower cylindrical wall or throat 32 to thereby create annular projection 48. An annular shelf 50 is provided by the top of the inner wall 49 of retaining ring 38. Residing between annular shelf 50 and annular projection 48 is rotatable dispensing disc 52 having dispensing orifice 54 therethrough. In such manner, annular shelf 50 serves as a retaining means for retaining dispensing disc 52 immediately below orifice 44 with throat 32 and annular projection 48 serving as a housing for dispensing disc 52. Because dispensing disc 52 is not as thick as the gap between annular projection 48 and annular shelf 50, dispensing disc 52 is allowed to freely rotate within throat 32 between the retaining means in response to external force.

Alternative retaining means can be used in place of retaining ring 38 and annular shelf 50 without departing from the scope of the present invention. Such alternative retaining means include pin-like projections extending radially inward and outward from lower cylindrical wall 32 allowing for nozzle 16 to be press-fit onto lid 12 and disc 52 to be press-fit into the housing. Similarly, press fitting could be accomplished with annular ribs.

As also can be seen from Fig. 2, cap 18 includes a top wall 56, and a cylindrical wall 58. Extending from top wall 56 on the side of cap 18 opposite restraining strap 20 is lift tab 60. A portion of top wall 56 may be thickened in the area adjacent lift tab 60 in order to add additional strength and prevent undue flexing when lift tab 60 is used to pry cap 18 off of nozzle 16. Cap 18 may be press fit onto dispensing nozzle 16 such that cylindrical wall 58 frictionally and sealingly engages upper cylindrical wall 30 thereby eliminating vapour emissions from container 10 when cap 18 is in the closed position.

Looking next at Fig. 3, it can be seen that dispensing orifice 54 through dispensing disc 52 includes a node 62 having a plurality of appendages 64 extending therefrom. Node 62 and appendages 64 are all contiguous with one another to form a single dispensing orifice 54. Three appendages 64 are preferred but the number of appendages 64 can be two (2) or greater depending on the size of disc 52 and the product being dispensed. The distal ends of each appendage 64 are preferably somewhat broadened as compared to the width of appendages 64. Dispensing disc 52 may also include one or more drain holes 66 therethrough which are not contiguous with dispensing orifice 54.

In operation, it is believed that the rotatable dispensing disc 52 allows for the substantial equalization of frictional forces on lead end 26 as it is drawn through dispensing orifice 54 regardless of the side of the container from which the user is pulling on lead end 26. The appendages 64 of dispensing orifice 54 creates a moment-arm effect as the lead end 26 is drawn therethrough causing the dispensing disc 52 to rotate to the path of least resistance. Thus, the user may be standing at any position in a 360° circle surrounding the container 10 and pull at lead end 26 to thereby withdraw the wet wiper from the dispenser and the frictional force should be substantially the same assuming that the angle to the vertical at which the lead end is pulled remains substantially the same. In such manner, the roll of wet wipes 22 should suffer fewer premature breaks during dispensing.

As the lead end 26 of the web is drawn through the dispensing orifice 54, it is likely that some of the liquid of the saturated wiper will be squeezed off as it is drawn through the restriction. The liquid should be collected within dispensing nozzle 16 with frusto-conical section 34 causing it to flow back toward orifice 40. As such free liquid encounters dispensing disc 52, it will be allowed to fall back within container 10 through drain holes 66.

It should be appreciated that dispensing from any centerflow dispenser will cause some twisting of the web as it uncoils from the centre of the roll and is drawn through the dispensing orifice. It has been seen that the rotatable dispensing disc 52 relieves some of this twisting as each sheet is dispensed. As a sheet is dispensed and torn from the roll 22, dispensing disc 52 reacts to the twisting of the web within container 10 below orifice 54 by rotating slightly to thereby alleviate some of that twisting.

From the foregoing, it will be seen that this invention is one well adapted to obtain all of the ends and objects hereinabove set forth together with other advantages which are apparent and which are inherent to the apparatus.

It will be understood that certain features and subcombinations are of utility and may be employed with reference to other features and combinations. This is contemplated by and is within the scope of the claims.

As many possible embodiments may be made of the invention without departing from the scope thereof, it is to be understood that all matter herein set forth or shown in the accompanying drawings is to be interpreted as illustrative and not in a limiting sense.

## Claims

1. A dispensing gateway for dispensing saturated wipers from a container (10), said dispensing gateway (14) comprising:
(a) a nozzle (16);
(b) means (38) for affixing said nozzle (16) to the container (10);
(c) a bore (44) through said nozzle (16);
(d) a rotatable dispensing disc (52) residing adjacent said bore, said dispensing disc (52) having an orifice (54) therethrough.

2. A dispensing gateway as claimed in claim 1, wherein a housing extends from said nozzle (16); and said dispensing disc (52) is rotatably residing within said housing.

3. A dispensing gateway as claimed in claim 1 or 2, wherein:
said orifice (54) includes a node (62) with a plurality of appendages (64) extending therefrom.

4. A dispensing gateway as claimed in any of claims 1 to 3, wherein:
said rotatable dispensing disc (52) has at least one drain hole (66) therethrough, said drain hole (66) being discontiguous with said orifice (54).

5. A dispensing gateway as claimed in any of claims 2 to 4, wherein:
said housing is substantially cylindrical and projects into the container.

6. A dispensing gateway as claimed in any one of claims 2 to 5, further comprising:
means (38) for retaining said dispensing disc (52) adjacent said bore (44) and within said housing.

7. A dispensing gateway as claimed in claim 6, wherein:
said retaining means (38) engages said housing.

8. A dispensing gateway as claimed in claim 6 or 7, wherein:
said retaining means is a retaining ring (38) having an annular slot (40) therein which engages said housing, said retaining ring (38) having an inner wall (49) which provides a shelf (50) for supporting said dispensing disc (52).

9. A dispensing gateway as claimed in any one of claims 1 to 8, further comprising:
a cap (18) attachable to and detachable from said nozzle (16).

10. A dispensing gateway as claimed in claim 9, further comprising:
a restraining strap (20) extending from said nozzle (16) to said cap (18).

11. A dispenser for dispensing saturated wipers comprising:
(a) a container (10);
(b) a lid (12) attachable to said container (10);
(c) an opening (35) through said lid (12);
(d) a dispensing gateway (14) affixed to said lid (12); said dispensing gateway (14) including a rotatable dispensing disc (52) having a dispensing orifice (54) therethrough, said dispensing orifice (54) being substantially overlapped by said opening (35).

12. A dispenser as claimed in claim 11, wherein:
said orifice (52) includes a node (62) with a plurality of appendages (64) extending therefrom.

13. A dispenser as claimed in claim 11 or 12, wherein:
said rotatable dispensing disc (52) has at least one drain hole (66) therethrough, said drain hole (66) being discontiguous with said orifice (52).

14. A dispenser as claimed in any one of claims 11 to 13, further comprising:
a cap (18) attachable to and detachable from said nozzle (16).

15. A dispenser as claimed in claim 14, further comprising:
a restraining strap (20) extending from said nozzle (16) to said cap (18).

16. A dispenser as claimed in any one of claims 11 to 15, including a housing extending from said nozzle,
said housing being substantially cylindrical and projecting into the container.

17. A dispenser as claimed in claim 16, further comprising:
means (38) for retaining said dispensing disc (52) adjacent a bore (44) through said nozzle (16) and within said housing.

18. A dispenser as claimed in claim 17, wherein said retaining means (38) engages said housing.

19. A dispenser as claimed in claim 17 or 18, wherein:
said retaining means is a retaining ring (38) having an annular slot (40) therein which engages said housing, said retaining ring (38) having an inner wall (49) which provides a shelf (50) for supporting said dispensing disc (52).

## Patentansprüche

1. Spenderauslaß für die Ausgabe von nassen Tüchern aus einem Behälter (10), wobei der Spenderauslaß (14) folgendes umfaßt:
(a) ein Mündungsstück (16);
(b) ein Mittel (38) zum Befestigen des genannten Mündungsstücks (16) an dem Behälter (10);
(c) eine Bohrung (44) durch das genannte Mündungsstück (16);
(d) eine neben der genannten Bohrung befindliche drehbare Ausgabescheibe (52), wobei die genannte Ausgabescheibe (52) über einen Ausgang (54) verfügt.

2. Spenderauslaß nach Anspruch 1, worin ein Gehäuse von dem genannten Mündungsstück (16) wegverläuft und sich die genannte Ausgabescheibe (52) drehbar in dem genannten Gehäuse befindet.

3. Spenderauslaß nach Anspruch 1 oder 2, worin der genannte Ausgang (54) einen Knotenpunkt (62) mit einer Mehrzahl davon wegverlaufender Glieder (64) umfaßt.

4. Spenderauslaß nach einem der Ansprüche 1 bis 3, worin:
die genannte drehbare Ausgabescheibe (52) über wenigstens eine Ablauföffnung (66) verfügt, wobei diese Ablauföffnung (66) mit dem genannten Ausgang (54) nicht zusammenhängend ist.

5. Spenderauslaß nach einem der Ansprüche 2 bis 4, worin:
das genannte Gehäuse im wesentlichen zylinderförmig ist und in den Behälter ragt.

6. Spenderauslaß nach einem der Ansprüche 2 bis 5, weiterhin umfassend:
ein Mittel (38) zum Halten der genannten Ausgabescheibe (52) neben der genannten Bohrung (44) und in dem genannten Gehäuse.

7. Spenderauslaß nach Anspruch 6, worin:
das genannte Haltemittel (38) in das genannte Gehäuse eingreift.

8. Spenderauslaß nach Anspruch 6 oder 7, worin:
das genannte Haltemittel ein Haltering (38) mit einem ringförmigen Schlitz (40) ist, der in das genannte Gehäuse eingreift, wobei der genannte Haltering (38) eine Innenwand (49) hat, die einen Träger (50) zum Auflegen der genannten Ausgabescheibe (52) bereitstellt.

9. Spenderauslaß nach einem der Ansprüche 1 bis 8, weiterhin umfassend:
eine Abdeckung (18), die an das genannte Mündungsstück (16) anfügbar und von diesem wieder abnehmbar ist.

10. Spenderauslaß nach Anspruch 9, weiterhin umfassend:
einen von dem genannten Mündungsstück (16) zur genannten Abdeckung (18) wegverlaufenden Halteriemen (20).

11. Spender für die Ausgabe von nassen Tüchern, umfassend:
(a) einen Behälter (10);
(b) einen an dem genannten Behälter (10) anbringbaren Deckel (12);
(c) eine Öffnung (35) durch den genannten Deckel (12);
(d) einen an dem genannten Deckel (12) befestigten Spenderauslaß (14), wobei dieser Spenderauslaß (14) eine drehbare Ausgabescheibe (52) mit einem Ausgang (54) umfaßt, wobei der genannte Ausgang (54) im wesentlichen von der genannten Öffnung (35) überlappt wird.

12. Spender nach Anspruch 11, worin:
der genannte Ausgang (52) einen Knotenpunkt (62) mit einer Mehrzahl davon wegverlaufender Glieder (64) umfaßt.

13. Spender nach Anspruch 11 oder 12, worin:
die genannte drehbare Ausgabescheibe (52) über wenigstens eine Ablauföffnung (66) verfügt, wobei die genannte Ablauföffnung (66) mit dem genannten Ausgang (52) nicht zusammenhängend ist.

14. Spender nach einem der Ansprüche 11 bis 13, weiterhin umfassend:
eine Abdeckung (18), die an das genannte Mündungsstück (16) anfügbar und von diesem wieder abnehmbar ist.

15. Spender nach Anspruch 14, weiterhin umfassend:
einen von dem genannten Mündungsstück (16) zur genannten Abdeckung (18) wegverlaufenden Halteriemen (20).

16. Spender nach einem der Ansprüche 11 bis 15, umfassend ein von dem genannten Mündungsstück wegverlaufendes Gehäuse,
wobei das genannte Gehäuse im wesentlichen zylinderförmig ist und in den Behälter ragt.

17. Spender nach Anspruch 16, weiterhin umfassend:
ein Mittel (38) zum Halten der genannten Ausgabescheibe (52) neben einer in dem genannten Mündungsstück (16) befindlichen Bohrung (44) und in dem genannten Gehäuse.

18. Spender nach Anspruch 17, worin:
das genannte Haltemittel (38) in das genannte Gehäuse eingreift.

19. Spender nach Anspruch 17 oder 18, worin:
das genannte Haltemittel ein Haltering (38) mit einem ringförmigen Schlitz (40) ist, der in das genannte Gehäuse eingreift, wobei der genannte Haltering (38) eine Innenwand (49) hat, die einen Träger (50) zum Auflegen der genannten Ausgabescheibe (52) bereitstellt.

## Revendications

1. Passage de distribution pour distribuer des tissus imbibés à partir d'un récipient (10), ledit passage de distribution (14) comprenant:
(a) un bec (16);
(b) un moyen (38) pour fixer ledit bec (16) au récipient (10);
(c) un alésage (44) à travers ledit bec (16);
(d) un disque de distribution rotatif (52) placé adjacent audit alésage, ledit disque de distribution (52) étant traversé par un orifice (54).

2. Passage de distribution tel que revendiqué à la revendication 1, dans lequel un logement s'étend à partir du dit bec (16); et ledit disque de distribution (52) est placé rotativement à l'intérieur dudit logement.

3. Passage de distribution tel que revendiqué à la revendication 1 ou 2, dans lequel:
ledit orifice (54) comporte un noeud (62) d'où s'étendent une pluralité d'appendices (64).

4. Passage de distribution tel que revendiqué dans l'une quelconque des revendications 1 à 3, dans lequel:
ledit dique de distribution rotatif (52) est traversé par au moins un trou de purge (66), ledit trou de purge (66) n'étant pas contigu audit orifice (54).

5. Passage de distribution tel que revendiqué dans l'une quelconque des revendications 2 à 4, dans lequel:
ledit logement est sensiblement cylindrique et fait saillie à l'intérieur du récipient.

6. Passage de distribution tel que revendiqué dans l'une quelconque des revendications 2 à 5, comprenant en outre:
un moyen (38) pour retenir ledit disque de distribution (52) adjacent audit alésage (44) et à l'intérieur dudit logement.

7. Passage de distribution tel que revendiqué à la revendication 6, dans lequel:
ledit moyen de retenue (38) engage ledit logement.

8. Passage de distribution tel que revendiqué à la revendication 6 ou 7, dans lequel:
ledit moyen de retenue est une bague de retenue (38) comportant une fente annulaire (40) qui engage ledit logement, ladite bague de retenue (38) ayant une paroi interne (49) qui constitue une tablette (50) pour supporter ledit disque de distribution (52).

9. Passage de distribution tel que revendiqué dans l'une quelconque des revendications 1 à 8, comprenant en outre:
une capsule (18) pouvant être attachée et détachée dudit bec (16).

10. Passage de distribution tel que revendiqué à la revendication 9, comprenant en outre:
une bride de retenue (20) s'étendant dudit bec (16) à ladite capsule (18).

11. Distributeur pour distribuer des tissus imbibés, comprenant:
(a) un récipient (10);
(b) un couvercle (12) pouvant être attaché audit récipient (10);
(c) une ouverture (35) à travers ledit couvercle (12);
(d) un passage de distribution (14) fixé audit couvercle (12); ledit passage de distribution (14) comportant un disque de distribution rotatif (52) traversé par un orifice de distribution (54), ledit orifice de distribution (54) étant sensiblement chevauché par ladite ouverture (35).

12. Distributeur tel que revendiqué à la revendication 11, dans lequel:
ledit orifice (52) comporte un noeud (62) d'où s'étendent une pluralité d'appendices (64).

13. Distributeur tel que revendiqué à la revendication 11 ou 12, dans lequel:
ledit disque de distribution rotatif (52) est traversé par au moins un trou de purge (66), ledit trou de purge (66) n'étant pas contigu audit orifice (52).

14. Distributeur tel que revendiqué dans l'une quelconque des revendications 11 à 13, comprenant en outre:
une capsule (18) pouvant être attachée et détachée dudit bec (16).

15. Distributeur tel que revendiqué à la revendication 14, comprenant en outre:
une bride de retenue (20) s'étendant dudit bec (16) à ladite capsule (18).

16. Distributeur tel que revendiqué dans l'une quelconque des revendications 11 à 15, comportant un logement s'étendant à partir dudit bec,
ledit logement étant sensiblement cylindrique et faisant saillie à l'intérieur du récipient.

17. Distributeur tel que revendiqué à la revendication 16, comprenant en outre:
un moyen (38) pour retenir ledit disque de distribution (52) adjacent un alésage (44) à travers ledit bec (16) et à l'intérieur dudit logement.

18. Distributeur tel que revendiqué à la revendication 17, dans lequel ledit moyen de retenue (38) engage ledit logement.

19. Distributeur tel que revendiqué à la revendication 17 ou 18, dans lequel:
ledit moyen de retenue est une bague de retenue (38) comportant une fente annulaire (40) qui engage ledit logement, ladite bague de retenue (38) ayant une paroi interne (49) qui constitue une tablette (50) pour supporter ledit disque de distribution (52).
